# EUROPÄISCHE PATENTSCHRIFT

(11) **EP 2 228 297 B1**
(45) Veröffentlichungstag und Bekanntmachung des Hinweises auf die Patenterteilung: **09.07.2014**
(21) Anmeldenummer: 10155897.1
(22) Anmeldetag: 09.03.2010
(51) Int. Cl.: B64C 1/20, B64C 1/22, B64C 1/00, B64D 9/00

(54) **Bodenmodul eines Frachtdecks im Rumpf eines Flugzeugs**
Floor module for a cargo compartment in an aircraft fuselage
Module de plancher de compartiment à fret dans un fuselage d'aéronef

(30) Priorität: 10.03.2009 DE 102009012429
(43) Veröffentlichungstag der Anmeldung: 15.09.2010
(73) Patentinhaber: Telair International GmbH, 83714 Miesbach (DE)
(72) Erfinder: Huber, Thomas, 83727, Schliersee (DE); Holzner, Richard, 83071, Stephanskirchen (DE)
(74) Vertreter: Bohnenberger, Johannes

(56) Entgegenhaltungen:
- WO-A1-2005/012083
- WO-A1-2008/157075
- US-A1- 2002 148 382
- US-A1- 2006 060 705

## Beschreibung

Die Erfindung betrifft ein Bodenmodul eines Frachtdecks in einem Rumpf eines Flugzeugs nach dem Oberbegriff des Patentanspruches 1.

Aus der EP 1 646 556 B1, die den nächstliegenden Stand der Technik darstellt, und aus der EP 1 646 557 B1 ist ein Frachtdeck zur Aufnahme von Ladung im Frachtraum eines Flugzeugs bekannt, das aus Bodenmodulen aufgebaut ist. Die Bodenmodule können außerhalb des Flugzeugrumpfes montiert und in einem zum großen Teil fertig montierten Zustand in das Flugzeug eingebaut werden. Weiterhin ist es möglich, diese Bodenmodule zur Umrüstung eines Flugzeugs für einen anderen Verwendungszweck auszubauen und durch andere Bodenmodule zu ersetzen.

Diese Bodenmodule müssen sowohl für sich alleine gesehen (bei Montage und Einbau in das Flugzeug) als auch später im Flugzeug eine hohe Stabilität aufweisen. Weiterhin sollen die Bodenmodule ein möglichst geringes Gewicht aufweisen und sollen leicht ein- und ausbaubar sein.

Der Erfindung liegt die Aufgabe zu Grunde, ein Bodenmodul der eingangs genannten Art dahin gehend aufzuzeigen, dass eine einfache Handhabung beim Ein- und Ausbau bei geringem Gewicht erzielbar ist.

Diese Aufgabe wird durch ein Bodenmodul nach Anspruch 1 gelöst.

Insbesondere wird die Aufgabe gelöst durch ein Bodenmodul eines Frachtdecks in einem Rumpf eines Flugzeugs mit einer Längsachse (x), einer Querachse (y) und einer Hochachse (z), umfassend Stützeinrichtungen zum Tragen von Funktionselementen, z.B. Paneelen, Rollenbahnen oder Kugelmatten, wobei die Stützeinrichtungen direkt oder über Zwischenelemente am Rumpf befestigbar sind, wobei das Bodenmodul in Längsrichtung (x) des Flugzeugs gesehen endseitige Stützeinrichtungen mit einer derart verminderten Dicke gegenüber den anderen Stützeinrichtungen des Bodenmoduls aufweist, dass sie nur zusammen mit endseitigen Stützeinrichtungen eines angrenzend im Rumpf montierten Bodenmoduls eine Tragkraft sicherstellen, die mindestens der Tragkraft der anderen Stützeinrichtungen entspricht. Dies bedeutet also, dass derartige endseitige Stützeinrichtungen eine verringerte Tragkraft gegenüber den in mittleren Bereichen der Bodenmodule montierten Stützeinrichtungen aufweisen. Dadurch wird nicht nur Gewicht gespart, es können vielmehr die endseitigen Stützeinrichtungen auch derart ausgebildet werden, dass sie beim Montieren leichter handhabbar werden.

Die endseitigen Stützeinrichtungen weisen vorzugsweise endseitige Komplementärflächen auf, so dass aneinander grenzende endseitige Stützflächen mit fluchtenden Randbereichen oder Umrissen aneinander fügbar sind. Bei einer bevorzugten Ausführungsform sind hierbei die endseitigen Komplementärflächen im Wesentlichen als glatte Flächen ausgebildet, so dass zwei aneinander grenzende endseitige Stützeinrichtungen flach aufeinander liegen. Alternativ ist es auch möglich, Profilierungen zur Erhöhung der Biegesteifigkeit vorzusehen, jedoch sind diese dann derart gegeneinander (komplementär) verschoben, dass diese Profilierungen nicht auf- sondern nebeneinander liegen. Dadurch wird eine erhöhte Stabilität bei verringerter Dimensionierung der montierten Module erzielt.

Eine besondere Festigkeitssteigerung der montierten Module ergibt sich dann, wenn an den endseitigen Stützeinrichtungen Verbindungseinrichtungen vorgesehen sind, welche die endseitigen Stützeinrichtungen benachbarter Module miteinander unter Erhöhung einer zulässigen Beullast und/oder Biegelast verbinden. Diese Verbindungseinrichtungen sollen möglichst einfach lösbar sein, können z.B. also als Schraubbolzen oder dergleichen ausgeführt sein.

Nachfolgend wird eine bevorzugte Ausführungsform der Erfindung anhand von Abbildungen näher beschrieben. Hierbei zeigen:
- Fig. 1 eine perspektivische Darstellung von zwei noch nicht aneinander grenzend montierten Bodenmodulen,
- Fig. 2 die nicht montierten Bodenmodule von Fig. 1 in einer Seitenansicht (in y-Richtung) und
- Fig. 3 die in Fig. 2 gezeigten Bodenmodule im montierten (aneinander grenzenden) Zustand.

In der nachfolgenden Beschreibung werden für gleiche und gleich wirkende Teile dieselben Bezugsziffern verwendet.

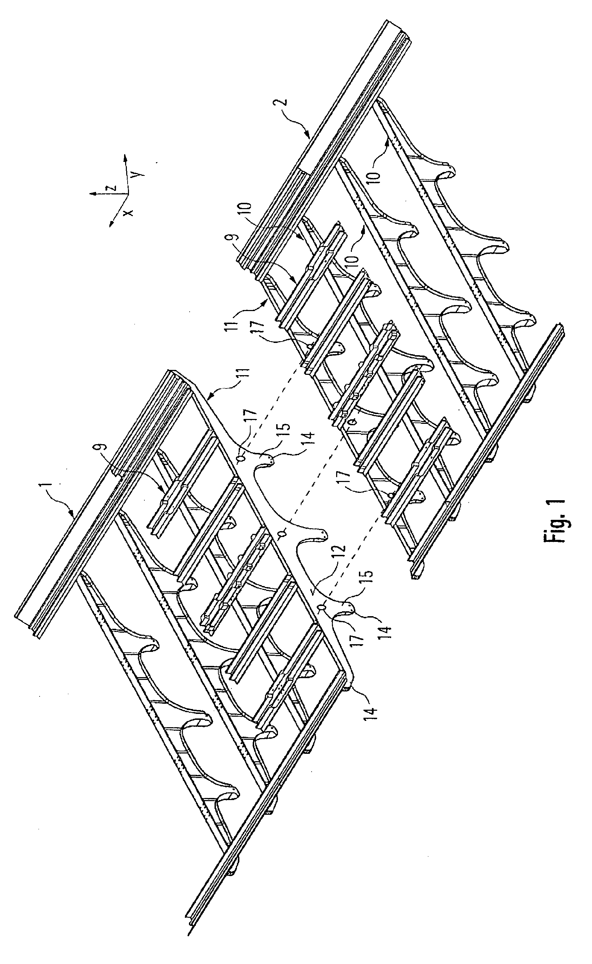

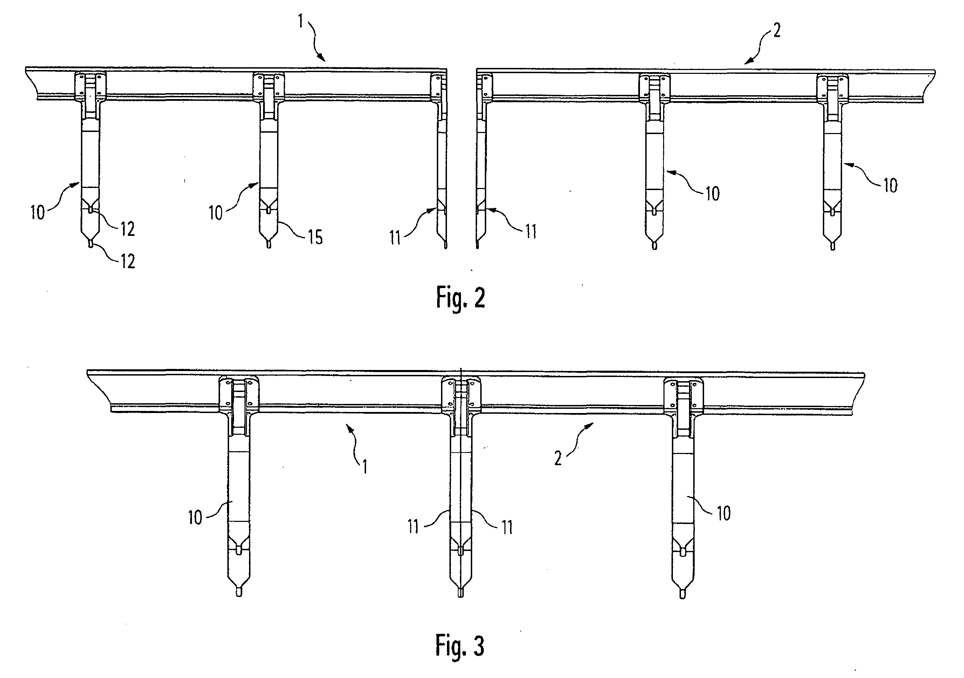

Wie in Fig. 1 gezeigt und in den Fig. 2 und 3 nochmals verdeutlicht, sind Bodenmodule 1, 2 vorgesehen, welche Stützeinrichtungen 10, so genannte Querträger aufweisen, auf welchen Funktionselemente 9, im gezeigten Beispiel Rollenbahnen, montiert sind. Zur besseren Darstellung sind die üblicherweise ebenfalls vorgesehenen Paneele, welche das entstehende Frachtdeck schließen, nicht gezeigt.

Weiterhin sind endseitige Stützeinrichtungen 11 vorgesehen, welche in wenig anders aussehen, als die übrigen Stützeinrichtungen 10. Alle Stützeinrichtungen weisen jedoch Füße 15 auf, mit Befestigungseinrichtungen 14, über welche die Bodenmodule 1, 2 im Rumpf eines Flugzeugs befestigt werden können. Diese Füße 15 können auch gesondert an den Stützeinrichtungen 10, 11 montiert sein und nicht, wie im Beispiel gezeigt, mit diesen einstückig ausgebildet sein.

Die endseitigen Stützeinrichtungen 11 weisen Komplementärflächen 12 auf, die so ausgebildet sind, dass jeweils zwei endseitige Stützeinrichtungen 11 von zwei aneinander grenzenden Bodenmodulen 1, 2 dicht aneinander anbringbar sind. Wenn die Komplementärflächen so, wie im Beispiel gezeigt, als einfache, flache Flächen ausgebildet sind, so können zwei aufeinander liegende endseitige Stützeinrichtungen so, wie in Fig. 2 gezeigt, im Wesentlichen dieselbe Dicke aufweisen, wie die übrigen Stützeinrichtungen 10. Bei dieser Konstruktionsweise ist ein besonders einfacher Ein- und Ausbau einzelner Module 1 oder 2 aus einem ansonsten schon im Flugzeug fest montierten, aus Bodenmodulen bestehenden Frachtdeck möglich.

Eine weitere Erhöhung der Gesamtstabilität sowohl der endseitigen Stützeinrichtungen 11 als auch des gesamten, aus Bodenmodulen aufgebauten Frachtdecks ist dadurch zu erzielen, dass in den endseitigen Stützeinrichtungen 11 Verbindungseinrichtungen 17 vorgesehen sind, über welche benachbarte endseitige Stützeinrichtungen 11 aneinander befestigt werden. Dadurch ergeben sich mehrschichtige Aufbauten mit einer erhöhten Beul- und Biegestabilität.

### Bezugszeichenliste

- 1, 2: Bodenmodule
- 9: Funktionselement/Rollenbahn
- 10: Stützeinrichtungen
- 11: endseitige Stützeinrichtung
- 12: Komplementärflächen
- 14: Befestigungseinrichtung
- 15: Fuß
- 17: Verbindungseinrichtungen

## Patentansprüche

1. Bodenmodul eines Frachtdecks montierbar in einem Rumpf eines Flugzeugs mit einer Längsachse (x), einer Querachse (y) und einer Hochachse (z), umfassend
Stützeinrichtungen (10, 11) zum Tragen von Funktionselementen, z.B. Paneelen, Rollenbahnen (9) oder Kugelmatten, wobei die Stützeinrichtungen (10) direkt oder über Zwischenelemente am Rumpf befestigbar sind,
**dadurch gekennzeichnet, dass**
in Längsrichtung (x) des Flugzeugs gesehen endseitige Stützeinrichtungen (11) mit einer derart verminderten Dicke gegenüber den anderen Stützeinrichtungen (10) des Bodenmoduls (1, 2) ausbildbar sind, dass sie nur zusammen mit den endseitigen Stützeinrichtungen (11) eines angrenzend im Rumpf montierbaren Bodenmoduls eine Tragkraft sicherstellen, die mindestens der Tragkraft der anderen Stützeinrichtungen (10) entspricht.

2. Bodenmodul nach Anspruch 1,
**dadurch gekennzeichnet, dass**
die endseitigen Stützeinrichtungen (11) endseitige Komplementärflächen (12) aufweisen, so dass aneinander grenzende endseitige Stützeinrichtungen (11) mit fluchtenden Randbereichen oder Umrissen aneinander fügbar sind.

3. Bodenmodul nach einem der vorhergehenden Ansprüche, insbesondere nach Anspruch 2,
**dadurch gekennzeichnet, dass**
die endseitigen Komplementärflächen (12) als endseitige Glattflächen (12) ausgebildet sind.

4. Bodenmodul nach einem der vorhergehenden Ansprüche,
**dadurch gekennzeichnet, dass**
an den endseitigen Stützeinrichtungen (11) Verbindungseinrichtungen (17) vorgesehen sind, welche die endseitigen Stützeinrichtungen (11) benachbarter Module (1, 2) miteinander unter Erhöhung einer zulässigen Beullast und/oder Biegelast verbinden.

## Claims

1. Floor module of a cargo deck, arranged to be installed in a fuselage of an aircraft having a longitudinal axis (x), a transverse axis (y) and a vertical axis (z), comprising support devices (10, 11) for carrying functional elements, for example panels, roller tracks (9) or ball mats, the support devices (10) being arranged to be fixed to the fuselage directly or by way of intermediate elements,
**characterised in that**
end support devices (11) - at the ends when seen in the longitudinal direction (x) of the aircraft - are arranged to be constructed having, compared to the other support devices (10) of the floor module (1, 2), a thickness that is reduced in such a way that only together with the end support devices (11) of a floor module arranged to be installed adjacently in the fuselage do they ensure a loading capacity which corresponds at least to the loading capacity of the other support devices (10).

2. Floor module according to claim 1,
**characterised in that**
the end support devices (11) have complementary end surfaces (12) so that end support devices (11) that are adjacent to one another are joinable to one another with flush edge regions or contours.

3. Floor module according to one of the preceding claims, especially according to claim 2,
**characterised in that**
the complementary end surfaces (12) are constructed as smooth end surfaces (12).

4. Floor module according to one of the preceding claims,
**characterised in that**
at the end support devices (11) there are provided connecting devices (17) which connect the end support devices (11) of adjacent modules (1, 2) to one another whilst increasing an allowable buckling load and/or bending load.

## Revendications

1. Module de plancher d'un compartiment à fret à monter dans un fuselage d'un aéronef avec un axe longitudinal (x), un axe transversal (y) et un axe vertical (z), comprenant :
des dispositifs de support (10, 11) destinés à porter des éléments fonctionnels, par exemple des panneaux, des pistes de roulement (9) ou des nappes de billes, dans lequel les dispositifs de support (10) peuvent être fixés au fuselage directement ou au moyen d'éléments intermédiaires,
**caractérisé en ce que**
en regardant dans la direction longitudinale (x) de l'aéronef, des dispositifs de support d'extrémité (11) peuvent être réalisés avec une épaisseur réduite par rapport aux autres dispositifs de support (10) du module de plancher (1, 2), de telle manière qu'ils n'assurent qu'avec les dispositifs de support d'extrémité (11) d'un module de plancher à monter en position adjacente dans le fuselage une force portante qui correspond au moins à la force portante des autres dispositifs de support (10).

2. Module de plancher selon la revendication 1, **caractérisé en ce que** les dispositifs de support d'extrémité (11) présentent des faces complémentaires d'extrémité (12), de telle manière que des dispositifs de support d'extrémité (11) adjacents l'un à l'autre puissent être joints l'un à l'autre avec des zones de bord ou des contours en alignement.

3. Module de plancher selon l'une quelconque des revendications précédentes, en particulier selon la revendication 2, **caractérisé en ce que** les faces complémentaires d'extrémité (12) se présentent sous la forme de faces d'extrémité lisses (12).

4. Module de plancher selon l'une quelconque des revendications précédentes, **caractérisé en ce qu'**il est prévu sur les dispositifs de support d'extrémité (11) des dispositifs d'assemblage (17), qui assemblent les dispositifs de support d'extrémité (11) de modules voisins (1, 2) l'un à l'autre avec augmentation d'une charge de voilement et/ou d'une charge de flexion admissible.
